# EUROPEAN PATENT SPECIFICATION

(11) **EP 2 263 442 B1**
(45) Date of publication and mention of the grant of the patent: **16.01.2013**
(21) Application number: 10166188.2
(22) Date of filing: 16.06.2010
(51) Int. Cl.: A23N 15/02, A01G 9/14, A01D 45/00

(54) **Method and device for use in packaging tomberries**
Verfahren und Vorrichtung zur Verwendung bei der Verpackung von Tomberrys
Procédé et dispositif à utiliser pour emballer les tomberries

(30) Priority: 16.06.2009 NL 2003028
(43) Date of publication of application: 22.12.2010
(73) Proprietor: Duijvestijn, Theodorus Nicolaas Maria, 2685 SL Poeldijk (NL)
(72) Inventor: Duijvestijn, Theodorus Nicolaas Maria, 2685 SL Poeldijk (NL)
(74) Representative: Nijs, Erik Anton Marie

(56) References cited:
- WO-A-2009/019620
- GB-A- 1 144 662
- NL-A- 9 401 186
- NL-C2- 1 030 337

## Description

The invention relates to a method for use in growing, harvesting and/or packaging berry tomatoes.

Various kinds of tomatoes exist. In the context of the present patent application, a berry tomato ("tomberry") is understood to mean a tomato which, when ripe, has a fruit weight of 0.5-3 grams, for example on average about 1.5 grams. Many small tomatoes are thus still much heavier than berry tomatoes. A cherry tomato still weighs, for example, 10 grams or more. A berry tomato can have a length and/or width of 0.5-1.5 cm, for example approximately 0.8-1.3 cm. When growing berry tomatoes, the length and/or width which is usually aimed for is approximately 1 cm. Due to the fact that berry tomatoes are natural products, the size may differ slightly from this. A berry tomato can have various shapes and may, for example, be spherical or oval in shape, like the oval shape of a plum tomato.

Berry tomatoes are particularly suitable for use in salads and as garnish. Due to their size, berry tomatoes do not have to be cut. Berry tomatoes are only bitten through in the mouth, as a result of which the flavour experience differs from that of other, larger tomatoes.

When tomatoes are being harvested, they are usually removed from the plants individually and subsequently packaged in a packaging. In addition, it is known to cut vines of tomatoes from the plant, said vines of tomatoes then being packaged, that is to say the tomatoes are sold as vines. However, due to their small size, harvesting berry tomatoes by removing each berry tomato individually from the plant is very labour-intensive and expensive. In addition, selling vines of berry tomatoes is unattractive to the consumers of berry tomatoes, as removing the berry tomatoes from the vines after purchase is deemed to be relatively cumbersome. Also, the appearance of a vine of berry tomatoes is not very attractive to consumers.

It is an object of the invention to provide an improved method for packaging or treating berry tomatoes. This object is achieved according to the invention by means of a method for packaging or treating berry tomatoes which each have a fruit weight of 0.5-3 grams, preferably of 0.75-2 grams, comprising providing at least one vine of berry tomatoes, in which each berry tomato of the vine has a stalk by means of which said berry tomato is attached to said vine, and in which a cork layer has been formed between each berry tomato and the stalk thereof, removing the berry tomatoes from the vine, and packaging the berry tomatoes which have been removed from the vine into a packaging. According to the invention, during harvesting, the berry tomatoes are not removed individually from the plant, but as a vine of berry tomatoes. Each berry tomato on the vine has a stalk by means of which said berry tomato is attached to said vine. After the vine of berry tomatoes has been removed from the plant, a cork layer is allowed to develop between each berry tomato and the stalk thereof. Once the cork layers have developed, the berry tomatoes are removed from the vine. In other words, after the vines of berry tomatoes have been removed from the plant, said vines are "dried", during which process a kind of cork layer develops between the berry tomatoes and the stalks, so that the stalks can easily be removed from the berry tomatoes. Before the berry tomatoes are removed from the vine, the berry tomatoes are first given a chance to develop a cork layer which is such that the plurality of the berry tomatoes on the vine can be removed from the stalks substantially without damaging. By first allowing the cork layer to form and only subsequently removing the berry tomatoes from the vine, the berry tomatoes are not damaged, or hardly damaged at all. The quality of the berry tomatoes is maintained. If the cork layer were not allowed to form, there would be a risk of part of the skin of the berry tomato being pulled along during the process of removing the berry tomato from the vine. After the berry tomatoes have been removed from the vines, the berry tomatoes are packaged into a packaging. As a result, harvesting and/or packaging berry tomatoes is relatively simple and inexpensive, while the berry tomatoes which have been packaged without vines are attractive to consumers. In addition, the risk that berry tomato stalks will start to go mouldy inside the packaging is minimal, as the stalks have been removed.

It should be noted that it is known from WO2009/019620 to separate grapes from a grape cluster by shaking the grape cluster. However, the removal and packaging of berry tomatoes is not mentioned in said document.

The step of providing at least one vine of berry tomatoes according to the invention comprises, for example, removing at least one vine of berry tomatoes from a plant and, following removal of the vine of berry tomatoes from the plant, allowing the cork layer to form between each berry tomato and the stalk thereof. After the cork layers have been allowed to develop, the berry tomatoes are removed from the vine. According to the invention, harvesting of the vines of berry tomatoes can take place in a first country, for example Spain or Italy, after which the vines of berry tomatoes are transported to a second country, such as the Netherlands. Allowing the cork layers to form between the berry tomatoes and the stalks can take place in the first country, during transportation from the first country to the second country and/or in the second country. In the second country, the berry tomatoes are then removed from the vines and packaged. Of course, the various steps can also be carried out in one and the same country.

In practice, it has been found that a sufficiently thick cork layer can develop if, from the instant in time at which the vine of berry tomatoes is removed from the plant, a period of time of at least 6 hours or at least 12 hours or at least 24 hours is allowed to pass before the berry tomatoes are removed from the vine. In order to speed up the development of the cork layer, the vine of berry tomatoes can be actively dried during said period. For example, air is sucked or blown through the vine of berry tomatoes.

In order to remove the berry tomatoes from the vine, the vine is preferably shaken in such a way that the berry tomatoes become detached from the vine. By shaking the vine, for example manually, the berry tomatoes can be detached from the vine in a simple and effective manner.

In this case, shaking can be effected above or inside a flexible holding container. Due to being shaken, the berry tomatoes which come off the vine travel at a relatively high speed. When hitting the flexible inner wall of the holding container, the quality of the berry tomatoes is maintained. The holding container is for example designed as a flexible bag, for example as a bag made of plastic or cloth.

It is possible for the berry tomatoes which have been removed from the vine to be sieved in order to remove material which is smaller than the berry tomatoes, for example small blossoms and/or twigs. Thereafter, the berry tomatoes which have been removed from the vine can be scanned and subsequently sorted, based on the scan, for example by means of image recognition, into approved and rejected berry tomatoes. As a result thereof, approximately 80% of defects are automatically filtered out.

In order to remove the remaining defects, the approved berry tomatoes are checked by means of a human eye, for example on a picking belt, before the approved berry tomatoes are packaged in the packaging. Each packaging is filled with a certain weight of berry tomatoes. This weight may be, for example, between 50-1000 grams, for example 100 grams, 125 grams or 500 grams.

It is possible that providing at least one vine of berry tomatoes comprises growing a plant in a growing space of a greenhouse, removing the vine of berry tomatoes in said growing space from the plant, and transporting the vine of berry tomatoes from the growing space of the greenhouse to a treatment space which is substantially separate from the growing space, and in which the berry tomatoes are removed from the vine and the berry tomatoes which have been removed from the vine are packaged in the treatment space. In the growing space of the greenhouse, the berry tomato plants grow. The vines of berry tomatoes are removed from the plants in the growing space and taken to the treatment space in, for example, crates. In the treatment space, the berry tomatoes are removed from the vines and the berry tomatoes are packaged in the packaging without vines. The growing space and the treatment space may be situated in separate buildings, for example at different locations. Alternatively, the growing space and the treatment space may be situated in different spaces of the same building.

The vine of berry tomatoes can be removed from the plant by cutting said vine, by picking or in another manner. The vines of berry tomatoes are removed from the plant, for example, manually. Nevertheless, it is possible for the vines of berry tomatoes to be removed from the plant automatically by means of a robot.

It is possible for the packaging to be supplied to a supply location, such as a wholesaler, supermarket, retailer and/or restaurant. After having been supplied, the packaging is sold and/or the berry tomatoes are removed from the packaging for consumption.

The packaging may be designed in various ways. It is possible for the packaging to be a consumer packaging. The consumer packaging comprises, for example, a box-shaped container and a lid, which is removably arranged on the container. The container and the lid are for example made of plastic, such as a transparent plastic. In addition, it is also possible for the packaging to be designed as a container, such as a crate, by means of which the berry tomatoes are transported from a first country to a second country.

The invention also relates to a system comprising:
- a greenhouse having a growing space which is provided with plants containing berry tomatoes, each of which has a fruit weight, when ripe, of 0.5-3 grams, preferably of 0.75-2 grams,
- a treatment space which is substantially separate from the growing space, as well as
- at least one container for holding the vines of berry tomatoes which have been removed from the plants in the growing space of the greenhouse,
- transport means for transporting the container containing vines of berry tomatoes from the growing space to the treatment space, and
- a packaging device for packaging berry tomatoes which is arranged in the treatment space, and which is provided with a holding container for holding berry tomatoes which have been removed from the vines, which holding container is provided with a discharge for discharging the berry tomatoes, which is connected to a filling station for packaging the berry tomatoes in a packaging.

As has already been indicated above, the growing space and the treatment space can be situated in separate buildings, for example at different locations. Alternatively, the growing space and the treatment space may be situated in different spaces in the same building.

In this case, it is possible for the discharge of the holding container of the packaging device to be connected to a sieve by means of a first conveyor track in order to remove material which is smaller than the berry tomatoes, for example small blossoms and/or twigs, and in which the sieve is connected to a scanning device by means of a second conveyor track in order to optically scan the berry tomatoes and to a sorting device for sorting the berry tomatoes, on the basis of the optical scan, into approved and rejected berry tomatoes, and in which the sorting device has an outlet for the approved berry tomatoes which is connected to the filling station by means of a third conveyor track.

The invention will now be explained in more detail with reference to an exemplary embodiment illustrated in the drawing, in which:

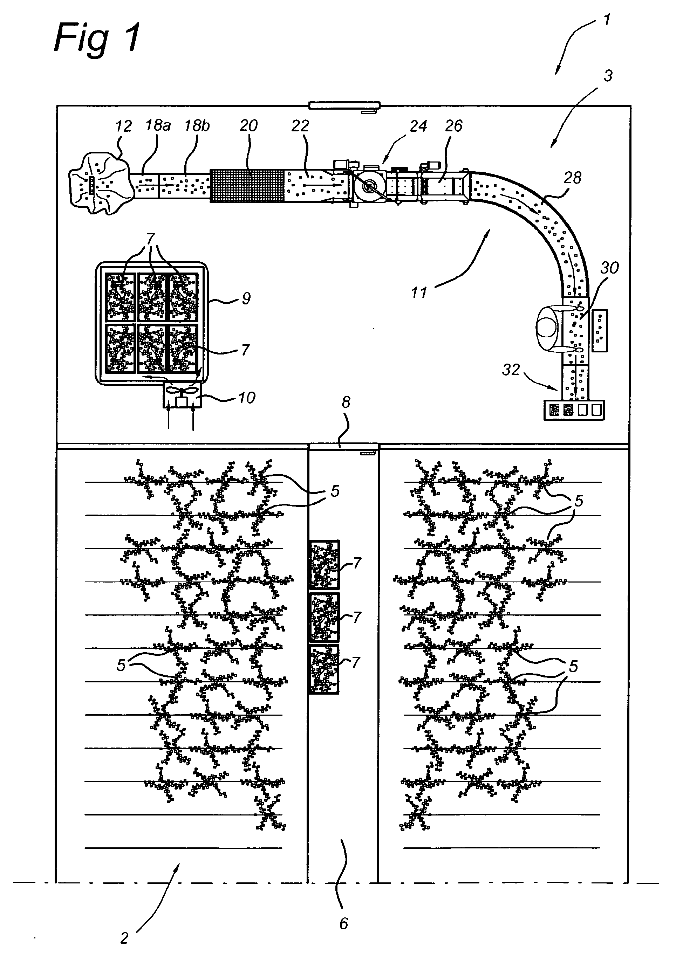

Fig. 1 shows a diagrammatic top view of a greenhouse comprising a growing space and a treatment space which is provided with a system for growing and/or harvesting berry tomatoes according to the invention.
Fig. 2 shows a side view of a part of the system illustrated in Fig. 1.

A greenhouse 1 comprises a growing space 2 and a treatment space 3 which are substantially separate from one another. However, the treatment space may also be situated in a building separate from the greenhouse at another location (not shown). An aisle 6 runs through the growing space 2. On either side of the aisle 6, berry tomato plants 5 are grown. Vines of berry tomatoes grow on each berry tomato plant 5. The berry tomatoes have, for example, a round shape.

In contrast to many other tomato plants, vines of berry tomato plants continue to branch. First, two flowers grow on the vine, the vine then branches off and new flowers grow on each branch, then the vine branches off again and so forth. A vine of ripe berry tomatoes of a berry tomato plant usually has approximately 50-200 berry tomatoes. A ripe berry tomato has a fruit weight of 0.5-3 grams, more particularly of 0.75-2 grams.

Incidentally, in each vine of berry tomatoes there is a difference in ripeness between the berry tomatoes. After all, the first flowers lead to riper berry tomatoes than the flowers which have appeared on the vine later. With each ripe vine of berry tomatoes, a loss has therefore to be accepted due to the amount of berry tomatoes which are too green or too ripe.

Before harvesting, the ripe vines of berry tomatoes are cut from the plants and collected in crates 7 or other containers. The crates 7 containing the vines of berry tomatoes are then transferred from the growing space 2, via the door 8, to the treatment space 3. For this purpose, for example, a trolley (not shown) or other transport means can be used.

In the treatment space 3, the crates 7 are for example stacked and covered by a tarpaulin 9. A ventilating fan 10 sucks air through the crates 7 so that the vines of berry tomatoes can "dry", that is to say, a kind of cork layer develops under the stalks of the berry tomatoes so that the berry tomatoes and the stalks can be separated from each other in a simple manner and without using much force. Drying takes at least approximately 12 hours.

Instead of drying the crates 7 of vines of berry tomatoes in the treatment space 3, they can also be dried in the growing space 2. For example, the crates 7 with the vines of berry tomatoes are placed on heating pipes in the growing space 2 (not shown). Depending on the atmospheric humidity, it may be desirable to prolong the drying stage in order to allow the formation of satisfactory cork layers, for example, to at least approximately 24 hours or more.

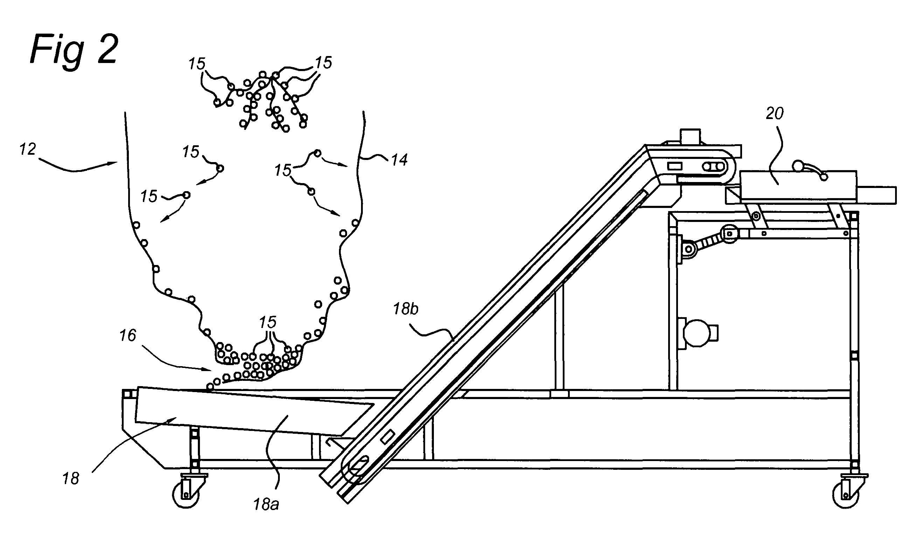

After the vines of berry tomatoes have been dried, the berry tomatoes are supplied to a packaging device 11 which is arranged in the treatment space 3. The packaging device 11 comprises a holding container 12, into which the berry tomatoes 15 are released from above by being shaken from the vines (see also Fig. 2). In this exemplary embodiment, the holding container 12 is designed as a flexible bag, the wall 14 of which slightly gives when the berry tomatoes 15 collide therewith from the inside. Thus, damage to the berry tomatoes 15 is limited.

The berry tomatoes 15 are discharged via a discharge 16 in the bag 12 to a first conveyor track 18 which, in this exemplary embodiment, is provided with a conveying section 18a extending slightly downwards and a conveying section 18b extending obliquely upwards. Other parts of the vine, such as blossoms and twigs, are carried along together with the berry tomatoes 15.

Downstream from the first conveyor track 18, a sieve 20 is situated which is, for example, designed as a bar sieve or a hole sieve. The sieve 20 filters out the berry tomatoes 15, that is to say, blossoms, twigs and other objects which are smaller than the berry tomatoes 15 fall through the sieve 20.

From the sieve 20, a second conveyor track 22 runs to a scanning device 24 for optically scanning the berry tomatoes 15 and a sorting device 26 for sorting the berry tomatoes 15 based on the optical scan into approved and rejected berry tomatoes. The scanning device 24 is, for example, a camera, while the sorting device 26 selects the approved berry tomatoes by means of image recognition. Thus, approximately 80% of rejects can be filtered out. The approved berry tomatoes leave the sorting device 26 via an outlet which is connected via a third conveyor track 28 to a picking belt 30 on which a second manual check is performed by means of a visual inspection by an individual. The picking belt 30 is connected to a filling station 32 for packaging an amount of berry tomatoes in a packaging. The amount of berry tomatoes can be adjusted by the filling station 32.

The invention is not limited to the exemplary embodiment illustrated in the drawing. Those skilled in the art can make various modifications which are within the scope of the invention as defined by the appended claims.

## Claims

1. Method for packaging berry tomatoes (15) which each have a fruit weight of 0.5-3 grams, preferably of 0.75-2 grams, comprising:
- providing at least one vine of berry tomatoes (15), in which each berry tomato (15) of the vine has a stalk by means of which said berry tomato (15) is attached to said vine and in which a cork layer has been formed between each berry tomato (15) and the stalk thereof,
- removing the berry tomatoes (15) from the vine,
- packaging the berry tomatoes (15) which have been removed from the vine into a packaging.

2. Method according to claim 1, in which providing at least one vine of berry tomatoes (15) comprises removing at least one vine of berry tomatoes (15) from a plant (5) and, after the vine of berry tomatoes (15) has been removed from the plant (5), allowing the cork layer to form between each berry tomato (15) and the stalk thereof.

3. Method according to claim 2, in which, from the instant in time at which the vine of berry tomatoes is removed from the plant (5), a period of at least 6 hours or at least 12 hours or at least 24 hours passes before the berry tomatoes (15) are removed from the vine.

4. Method according to claim 3, in which the vine of berry tomatoes is dried during said period.

5. Method according to one of the preceding claims, in which the berry tomatoes (15) are removed from the vine by shaking the vine in such a manner that the berry tomatoes (15) become detached from the vine.

6. Method according to claim 5, in which the berry tomatoes (15) are shaken above or inside a flexible holding container (12).

7. Method according to one of the preceding claims, in which the berry tomatoes (15) which have been removed from the vine are sieved in order to remove material which is smaller than the berry tomatoes, for example small blossoms and/or twigs.

8. Method according to one of the preceding claims, in which the berry tomatoes (15) which have been removed from the vine are scanned and subsequently sorted, based on the scan, for example by means of image recognition, into approved and rejected berry tomatoes (15).

9. Method according to claim 8, in which the approved berry tomatoes (15) are checked by means of a human eye.

10. Method according to claim 8 or 9, in which the approved berry tomatoes (15) are packaged into the packaging.

11. Method according to one of the preceding claims, in which providing at least one vine of berry tomatoes (15) comprises growing a plant (5) in a growing space (2) of a greenhouse (1), removing the vine of berry tomatoes (15) in said growing space (2) from the plant (5), and transporting the vine of berry tomatoes (15) from the growing space (2) of the greenhouse (1) to a treatment space (3) which is substantially separate from the growing space (2), and in which removing the berry tomatoes (15) from the vine and packaging the berry tomatoes (15) which have been removed from the vine takes place in the treatment space (3).

12. Method according to one of the preceding claims, in which the packaging is supplied to a supply location.

13. Method according to one of the preceding claims, in which the packaging comprises a consumer packaging.

14. System, comprising:
- a greenhouse (1) having a growing space (2) which is provided with plants (5) containing berry tomatoes (15), each of which has a fruit weight, when ripe, of 0.5-3 grams, preferably of 0.75-2 grams,
- a treatment space (3) which is substantially separate from the growing space (2), as well as
- at least one container (7) for holding the vines of berry tomatoes which have been removed from the plants (5) in the growing space (2) of the greenhouse (1),
- transport means for transporting the container (7) containing vines of berry tomatoes from the growing space (2) to the treatment space (3), and
- a packaging device (11) for packaging berry tomatoes (15) which is arranged in the treatment space (3), and which is provided with a holding container (12) for holding berry tomatoes (15) which have been removed from the vines, which holding container (12) is provided with a discharge (16) for removing the berry tomatoes (15), which is connected to a filling station (32) for packaging the berry tomatoes (15) in a packaging.

15. System according to claim 14, in which the discharge (16) of the holding container (12) of the packaging device (11) is connected to a sieve (20) by means of a first conveyor track (18) in order to remove material which is smaller than the berry tomatoes (15), for example small blossoms and/or twigs, and in which the sieve (20) is connected to a scanning device (24) by means of a second conveyor track (22) in order to optically scan the berry tomatoes (15) and to a sorting device (26) for sorting the berry tomatoes (15), on the basis of the optical scan, into approved and rejected berry tomatoes (15), and in which the sorting device (26) has an outlet for the approved berry tomatoes which is connected to the filling station (32) by means of a third conveyor track (28).

## Patentansprüche

1. Verfahren zum Packen von Beerentomaten (15), welche jeweils ein Fruchtgewicht von 0,5-3 g, vorzugsweise von 0,75-2 g aufweisen, umfassend:
- Bereitstellen mindestens einer Rebe von Beerentomaten (15), wobei jede Beerentomate (15) der Rebe einen Stiel aufweist, mittels welchem die Beerentomate (15) an der Rebe befestigt ist, und wobei eine Korkschicht zwischen jeder Beerentomate (15) und dem Stiel davon ausgebildet worden ist,
- Ablösen der Beerentomaten (15) von der Rebe,
- Packen der Beerentomaten (15), welche von der Rebe abgelöst worden sind, in eine Verpackung.

2. Verfahren nach Anspruch 1, **dadurch gekennzeichnet, dass** das Bereitstellen von mindestens einer Rebe von Beerentomaten (15) ein Ablösen von mindestens einer Rebe von Beerentomaten (15) von einer Pflanze (5) und, nachdem die Rebe von Beerentomaten (15) von der Pflanze (5) abgelöst worden ist, ein Ermöglichen, dass sich die Korkschicht zwischen jeder Beerentomate (15) und dem Stiel davon ausbildet, umfasst.

3. Verfahren nach Anspruch 2, **dadurch gekennzeichnet, dass** von dem Zeitpunkt, zu welchem die Rebe von Beerentomaten von der Pflanze (5) abgelöst wird, eine Periode von mindestens 6 Stunden oder mindestens 12 Stunden oder mindestens 24 Stunden vergeht, bevor die Beerentomaten (15) von der Rebe abgelöst werden.

4. Verfahren nach Anspruch 3, **dadurch gekennzeichnet, dass** die Rebe von Beerentomaten während der Periode getrocknet wird.

5. Verfahren nach einem der vorhergehenden Ansprüche, **dadurch gekennzeichnet, dass** die Beerentomaten (15) von der Rebe abgelöst werden, indem die Rebe in solch einer Weise geschüttelt wird, dass die Beerentomaten (15) von der Rebe gelöst werden.

6. Verfahren nach Anspruch 5, **dadurch gekennzeichnet, dass** die Beerentomaten (15) über oder innerhalb eines flexiblen aufnehmenden Behälters (12) geschüttelt werden.

7. Verfahren nach einem der vorhergehenden Ansprüche, **dadurch gekennzeichnet, dass** die Beerentomaten (15), welche von der Rebe abgelöst worden sind, gesiebt werden, um Material, welches kleiner als die Beerentomaten ist, wie beispielsweise kleine Blüten und/oder Zweige, zu entfernen.

8. Verfahren nach einem der vorhergehenden Ansprüche, **dadurch gekennzeichnet, dass** die Beerentomaten (15), welche von der Rebe abgelöst worden sind, abgetastet und anschließend abhängig von der Abtastung, beispielsweise mittels Bilderkennung, in freigegebene und zurückgewiesene Beerentomaten (15) sortiert werden.

9. Verfahren nach Anspruch 8, **dadurch gekennzeichnet, dass** die freigegebenen Beerentomaten (15) mittels eines menschlichen Auges überprüft werden.

10. Verfahren nach Anspruch 8 oder 9, **dadurch gekennzeichnet, dass** die freigegebenen Beerentomaten (15) in die Verpackung gepackt werden.

11. Verfahren nach einem der vorhergehenden Ansprüche, **dadurch gekennzeichnet, dass** das Bereitstellen von mindestens einer Rebe von Beerentomaten (15) ein Aufwachsen einer Pflanze (5) auf einer Anbaufläche (2) eines Gewächshauses (1), ein Lösen der Rebe von Beerentomaten (15) bei der Anbaufläche (2) von der Pflanze (5), und ein Transportieren der Rebe von Beerentomaten (15) von der Anbaufläche (2) des Gewächshauses (1) zu einem Bearbeitungsplatz (3), welcher im Wesentlichen abgetrennt von der Anbaufläche (2) ist, umfasst, und dass das Ablösen der Beerentomaten (15) von der Rebe und das Packen der Beerentomaten (15), welche von der Rebe abgelöst worden sind, bei dem Bearbeitungsplatz (3) stattfindet.

12. Verfahren nach einem der vorhergehenden Ansprüche, **dadurch gekennzeichnet, dass** die Verpackung an einem Zulieferungsplatz zugeführt wird.

13. Verfahren nach einem der vorhergehenden Ansprüche, **dadurch gekennzeichnet, dass** die Verpackung eine Käufer-Verpackung umfasst.

14. System umfassend:
- ein Gewächshaus (1), welches eine Anbaufläche (2) aufweist, welche mit Pflanzen (5) versehen ist, die Beerentomaten (15) aufweisen, wobei jede ein Fruchtgewicht, wenn sie reif sind, von 0,5-3 g, vorzugsweise von 0,75-2 g, aufweist,
- ein Bearbeitungsplatz (3), welcher im Wesentlichen abgetrennt von der Anbaufläche (2) ist, wie auch
- mindestens einen Behälter (7), um die Reben von Beerentomaten, welche von den Pflanzen (5) auf der Anbaufläche (2) des Gewächshauses (1) abgelöst worden sind, zu halten,
- Transportmittel, um den Behälter (7), welcher Reben von Beerentomaten enthält, von der Anbaufläche (2) zu dem Bearbeitungsplatz (3) zu transportieren, und
- eine Packungsvorrichtung (11) um Beerentomaten (15) zu packen, welche sich bei dem Bearbeitungsplatz (3) befindet, und welche mit einem aufnehmenden Behälter (12) versehen ist, um Beerentomaten (15), welche von den Reben abgelöst worden sind, zu halten, wobei der aufnehmende Behälter (12) mit einer Entnahme (16) versehen ist, um Beerentomaten (15) abzugeben, welche mit einer Beschickungsstation (32) verbunden ist, um die Beerentomaten (15) in eine Verpackung zu packen.

15. System nach Anspruch 14, **dadurch gekennzeichnet, dass** die Entnahme (16) des haltenden Behälters (12) der Verpackungsvorrichtung (11) mittels einer ersten Fördervorrichtung mit einem Sieb (20) verbunden ist, um Material, welches kleiner als die Beerentomaten (15) ist, beispielsweise kleine Blüten und/oder Zweige, zu entfernen, und wobei das Sieb (20) mittels einer zweiten Fördervorrichtung (22) mit einer Abtastvorrichtung (24), um die Beerentomaten (15) optisch abzutasten, und mit einer Sortierungsvorrichtung (26), um die Beerentomaten (15) abhängig von der optischen Abtastung in freigegebene und zurückgewiesene Beerentomaten (15) zu sortieren, verbunden ist, und wobei die Sortierungsvorrichtung (26) einen Auslass für die freigegebenen Beerentomaten aufweist, welcher mittels einer dritten Fördervorrichtung (28) mit der Beschickungsstation (32) verbunden ist.

## Revendications

1. Procédé pour emballer des baies de tomates (15) qui ont un poids de fruit de 0,5 - 3 grammes, de préférence de 0,75 - 2 grammes, comprenant les étapes consistant à :
- prévoir au moins une grappe de baies de tomates (15) dans lequel chaque baie de tomate (15) de la grappe a une queue au moyen de laquelle ladite baie de tomate (15) est attachée audite grappe et dans lequel une couche de liège a été formée entre chaque baie de tomate (15) et sa grappe,
- retirer les baies de tomates (15) de la grappe,
- emballer les baies de tomates (15) qui ont été retirées de la grappe dans un emballage.

2. Procédé selon la revendication 1, dans lequel l'étape consistant à prévoir au moins une grappe de baies de tomates (15) comprend l'étape consistant à retirer au moins une grappe des baies de tomates (15) d'une plante (5) et, après que la grappe de baies de tomates (15) a été retiré de la plante (5), permettre la formation de la couche de liège entre chaque baie de tomate (15) et sa queue.

3. Procédé selon la revendication 2, dans lequel, à partir du moment où la grappe de baies de tomates est retiré de la plante (5), il s'écoule une période d'au moins 6 heures ou au moins 12 heures ou au moins 24 heures avant que les baies de tomates (15) ne soient retirées de la grappe.

4. Procédé selon la revendication 3, dans lequel la grappe de baies de tomates est séché pendant ladite période.

5. Procédé selon l'une quelconque des revendications précédentes, dans lequel les baies de tomates (15) sont retirées de la grappe en secouant la grappe de sorte que les baies de tomates (15) se détachent de la grappe.

6. Procédé selon la revendication 5, dans lequel les baies de tomates (15) sont secouées au-dessus ou à l'intérieur d'un conteneur souple (12).

7. Procédé selon l'une quelconque des revendications précédentes, dans lequel les baies de tomates (15) qui ont été retirées de la grappe sont criblées afin de retirer la matière qui est plus petite que les baies de tomates, par exemple les petites fleurs et/ou les brindilles.

8. Procédé selon l'une des revendications précédentes, dans lequel les baies de tomates (15) qui ont été retirées de la grappe sont scannées et ensuite triées, en fonction du scanner réalisé par exemple au moyen d'une reconnaissance d'image, en baies de tomates approuvées et rejetées (15).

9. Procédé selon la revendication 8, dans lequel les baies de tomates approuvées (15) sont vérifiées au moyen de l'oeil humain.

10. Procédé selon la revendication 8 ou 9, dans lequel les baies de tomates approuvées (15) sont emballées dans l'emballage.

11. Procédé selon l'une quelconque des revendications précédentes, dans lequel l'étape consistant à prévoir au moins une grappe de baies de tomates (15) consiste à faire pousser une plante (5) dans un espace de culture (2) d'une serre (1), retirer la grappe de baies de tomates (15) dans ledit espace de culture (2) de la plante (5), et transporter la grappe de baies de tomates (15) de l'espace de culture (2) de la serre (1) à un espace de traitement (3) qui est sensiblement séparé de l'espace de culture (2), et dans lequel l'étape consistant à retirer les baies de tomates (15) de la grappe et à emballer les baies de tomates (15) qui ont été retirées de la grappe, a lieu dans l'espace de traitement (3).

12. Procédé selon l'une des revendications précédentes, dans lequel l'emballage est fourni à un emplacement de fourniture.

13. Procédé selon l'une des revendications précédentes, dans lequel l'emballage comprend un emballage pour consommateur.

14. Système comprenant :
- une serre (1) ayant un espace de culture (2) qui est prévu avec des plantes (5) contenant des baies de tomates (15), dont chacune a un poids de fruit, lorsqu'elle est mûre, de 0,5 -3 grammes, de préférence de 0,75 - 2 grammes,
- un espace de traitement (3) qui est sensiblement séparé de l'espace de culture (2), et
- au moins un conteneur (7) pour contenir les grappes de baies de tomates qui ont été retirés des plantes (5) dans l'espace de culture (2) de la serre (1),
- des moyens de transport pour transporter le conteneur (7) contenant les grappes de baies de tomates, de l'espace de culture (2) à l'espace de traitement (3), et
- un dispositif d'emballage (11) pour emballer les baies de tomates (15), qui est agencé dans l'espace de traitement (3), et qui est prévu avec un conteneur (12) pour contenir les baies de tomates (15) qui ont été retirées des grappes, lequel conteneur (12) est prévu avec une décharge (16) pour retirer les baies de tomates (15), qui est raccordée à une station de remplissage (32) pour emballer les baies de tomates (15) dans un emballage.

15. Système selon la revendication 14, dans lequel la décharge (16) du conteneur (12) du dispositif d'emballage (11) est raccordée à un crible (20) au moyen d'un premier transporteur (18) afin de retirer la matière qui est plus petite que les baies de tomates (15), par exemple les petites fleurs et/ou les brindilles, et dans lequel le crible (20) est raccordé à un dispositif de scanner (24) au moyen d'un deuxième transporteur (22) afin de scanner optiquement les baies de tomates (15) et à un dispositif de tri (26) pour trier les baies de tomates (15) en fonction du scanner optique, en baies de tomates approuvées et rejetées (15), et dans lequel le dispositif de tri (26) a une sortie pour les baies de tomates approuvées qui est raccordée à la station de remplissage (32) au moyen d'un troisième transporteur (28).
